# EUROPÄISCHE PATENTSCHRIFT

(11) **EP 3 103 781 B1**
(45) Veröffentlichungstag und Bekanntmachung des Hinweises auf die Patenterteilung: **05.08.2020**
(21) Anmeldenummer: 16169999.6
(22) Anmeldetag: 17.05.2016
(51) Int. Cl.: C04B 35/628, C04B 35/80, D06M 11/01, D06M 11/45, D06M 11/58, D06M 11/74, D06M 11/77, D01F 11/00, D01F 11/16, C04B 41/50

(54) **VERFAHREN UND ANLAGE ZUR HERSTELLUNG VON HOMOGEN MIT EINER KERAMIK BESCHICHTETEN FASERN**
METHOD AND ASSEMBLY FOR PREPARATION OF FIBRES HOMOGENEOUSLY COATED WITH A CERAMIC
PROCÉDÉ ET INSTALLATION POUR LA FABRICATION DE FIBRES REVÊTUES DE CÉRAMIQUE DE MANIÈRE HOMOGÈNE

(30) Priorität: 11.06.2015 DE 102015210730
(43) Veröffentlichungstag der Anmeldung: 14.12.2016
(73) Patentinhaber: Fraunhofer-Gesellschaft zur Förderung der angewandten Forschung e.V., 80686 München (DE)
(72) Erfinder: Nöth, Andreas, 97762 Hammelburg (DE)
(74) Vertreter: Pfenning, Meinig & Partner mbB

(56) Entgegenhaltungen:
- WO-A2-2011/122890
- DE-A1- 4 443 471
- ESCHENBAUM J ET AL: "Thin films of proton conducting SrZrO"3-ceramics prepared by the sol-gel method", SOLID STATE IONICS, NORTH HOLLAND PUB. COMPANY. AMSTERDAM; NL, NL, vol. 77, 1 April 1995 (1995-04-01), pages 222-225, XP004050450, ISSN: 0167-2738, DOI: 10.1016/0167-2738(94)00272-T

## Beschreibung

Erfindungsgemäß wird ein Verfahren und eine Anlage zur Herstellung von Fasern, die eine homogene, keramische Beschichtung aufweisen, aus einem Faserbündel bereitgestellt. Das Verfahren zeichnet sich dadurch aus, dass trotz hoher Prozessgeschwindigkeiten Fasern mit einer homogenen keramischen Schichtmikrostruktur und konstanter Schichtdicke bereitgestellt werden können. Das vorgestellte Verfahren basiert auf dem Lösungsansatz, die Beschichtung der Fasern mit Vorstufen und die Pyrolyse der beschichteten Fasern zu entkoppeln. Zunächst erfolgt die Beschichtung der Fasern mit Vorstufen bei Temperaturen < 500 °C und erst im Anschluss daran wird die Beschichtung bei höheren Temperaturen zur Keramik gebrannt. Dadurch wird eine signifikante Steigerung des Durchsatzes erreicht und die entstehenden keramischen Beschichtungen weisen weniger Defekte auf, die sonst üblicherweise durch Hochtemperatur-bedingte Ausgasung der Schichten auftreten.

Keramische Faserverbundwerkstoffe (engl. CMC = Ceramic Matrix Composites) benötigen eine geeignete Anbindung (Interface) zwischen der keramischen Verstärkungsfaser und der umgebenden keramischen Matrix, um ein schadenstolerantes Bruchverhalten und/oder hohe Bruchdehnungen des Werkstoffs zu ermöglichen. Die geeignete Anbindung wird in dichten CMCs mit geringem Porenvolumengehalt über eine Beschichtung der Fasern realisiert.

Um Einzelfasern eines Faserbündels zu beschichten wird im Stand der Technik u.a. ein Schichtauftrag mit flüssigen Beschichtungsprecursoren durchgeführt. Als Anforderungen an das Beschichtungsverfahren mit flüssigen Precusoren sind zu nennen:
▪ Die einzelnen Fasern sollen homogen beschichtet werden (z.B. bzgl. Schichtdicke, Schichtmikrostruktur und/oder Phasenbestand);
▪ Verbrückungen zwischen den Fasern aufgrund von Beschichtungsmaterial müssen möglichst verhindert werden;
▪ Defekte müssen vermieden werden (z.B. Schichtabplatzungen und/oder Risse in den Beschichtungen);
▪ Die Beschichtungen sollen eine geeignete Anbindung der Faser an die Matrix erlauben. Diese ermöglicht ein schadenstolerantes Bruchverhalten und/oder hohe Bruchdehnungen der keramischen Faserverbundwerkstoffe;
▪ Es müssen hohe Prozessgeschwindigkeiten und große Durchsätze realisiert werden, um kosteneffizient zu sein.

Die bisherigen Ansätze zum Beschichten von Fasern mit flüssigen Beschichtungsprecursoren bestehen aus einer gekoppelten Abfolge von Schichtauftrag und anschließender thermischer Behandlung der beschichteten Fasern (siehe z.B. US 5,951,764 A und US 7,494,691 B1). Dabei wird das Faserbündel zunächst entschlichtet. Die Entschlichtung des Faserbündels erfolgt im Normalfall thermisch oder chemisch. Nach der Entschlichtung werden die Fasern von einer Rolle abgezogen und durch ein Tauchbad mit einer Beschichtungslösung geführt, wo der Schichtauftrag erfolgt. Nach Passieren des Tauchbads wird das Bündel durch einen (Rohr-)Ofen gezogen, wo eine thermische Behandlung der Beschichtung stattfindet. Typischerweise werden dabei Temperaturen > 750 °C gewählt. Die beschichteten Fasern werden nach Passieren des Ofens wieder auf eine Rolle gewickelt. Der Prozess wird teilweise mehrfach wiederholt, um eine geeignete Schichtdicke zu erreichen. Bei der thermischen Behandlung werden bspw. Restlösemittel entfernt, organische Bestandteile abgespalten und die Schichten verdichtet.

Da bei diesem Prozess größere Mengen an gasförmigen Produkten entstehen, darf die Aufheizrate der Schichten nicht zu hoch sein, da sonst aufgrund der in kurzer Zeit entstehenden großen Menge an Gas Schichtdefekte, wie bspw. Risse, Poren und Abplatzungen auftreten. Das bedeutet, dass die Fasern langsam durch den gesamten Prozess gefahren werden müssen. Die Geschwindigkeit des Verfahrens ist dadurch limitiert. Die bis dato eingesetzten Flüssigphasen-Beschichtungsverfahren für Fasern sind zu langsam, um signifikante und industrierelevante Durchsätze zu ermöglichen. Grund für die bis dato langsamen Prozessgeschwindigkeiten ist die Kopplung von Beschichtungszyklus und thermischem Prozess.

Die DE 44 43 471 A1 offenbart ein Verfahren und eine Anlage zur Herstellung von Fasern, die eine Beschichtung aus anisotropem Kohlenstoff aufweisen.

Die WO 2011/122890 A2 offenbart ein Verfahren zur Herstellung von Kohlenstofffasern, die eine keramische Schicht aufweisen.

Die US 7,494,691 B1 offenbart ein Verfahren zur Herstellung von keramischen Fasern, die eine Rhabdophan-Beschichtung aufweisen.

Eschenbaum, J. et al. (Solid State Ionics, Bd. 77, S. 222-225, 1995) offenbaren ein Verfahren zur Herstellung von Substraten, die eine Beschichtung aus Ybdotiertem SrZrO₃ aufweisen.

Ausgehend hiervon war es die Aufgabe der vorliegenden Erfindung ein Verfahren und eine Anlage bereitzustellen, mit dem/der bei trotz hoher Prozessgeschwindigkeiten die Herstellung von Fasern mit einer homogenen Schichtmikrostruktur und einer konstanten Schichtdicke möglich ist.

Die Aufgabe wird gelöst durch das Verfahren gemäß Anspruch 1 und die Anlage gemäß Anspruch 7. In den abhängigen Ansprüchen sind bevorzugte Ausführungsformen aufgeführt.

Erfindungsgemäß wird ein Verfahren zur Herstellung von Fasern, die eine homogene, keramische Beschichtung aufweisen, aus einem Faserbündel bereitgestellt. Das Verfahren umfasst die Schritte
a) Entschlichtung eines Faserbündels zum Freilegen einzelner Fasern;
b) Homogene Beschichtung der einzelnen Fasern mit einer Mischung enthaltend eine Beschichtungsvorstufe und eine Flüssigkeit, wobei die flüssige Beschichtungsvorstufe einen nichtoxidischen Hartstoff oder eine Vorstufe eines nichtoxidischen Hartstoffs enthält und wobei die Fasern durch ein Tauchbad geführt werden, das die Mischung aus Beschichtungsvorstufe und Flüssigkeit enthält und/oder mit der Mischung aus Flüssigkeit und Beschichtungsvorstufe besprüht werden, wobei Fasern mit einer flüssigen Beschichtung entstehen;
c) Trocknen und Aushärten der flüssigen Beschichtung in einer Stabilisierungskammer bei einer Temperatur von < 500 °C, wobei die Flüssigkeit verdampft und die Beschichtungsvorstufe so stark an den Fasern haftet, dass diese nicht mehr durch ein erneutes Einwirken der Flüssigkeit von den Fasern ablösbar ist;
d) Pyrolyse der Beschichtungsvorstufe in einer Hochtemperaturkammer bei einer Temperatur von > 500 °C, wobei Fasern entstehen, die eine homogene, keramische Beschichtung aufweisen;
wobei die Schritte b) bis c) mehrmals wiederholt werden.

Das erfindungsgemäße Verfahren basiert auf dem Lösungsansatz, den Beschichtungszyklus bzw. die Beschichtungszyklen und die thermische Prozessierung der beschichteten Fasern bei hohen Temperaturen > 500 °C zu entkoppeln, wobei die Beschichtungen nach Passieren des Beschichtungsbades thermisch bei Temperaturen < 500 °C stabilisiert werden. Dadurch werden für beide Prozessschritte deutlich höhere Geschwindigkeiten möglich, welche insgesamt zu einer signifikanten Steigerung des Durchsatzes führt, die Kosteneffizienz des Verfahrens verbessert und die Herstellung von industrierelevanten Mengen an beschichteten Fasern erlaubt. Da beim Passieren des Stabilisierungsofen bei Temperaturen < 500 °C deutlich weniger Gase entstehen als bei den höheren Temperaturen wie im Stand der Technik üblich und die Beschichtungen weniger spröde als im voll-keramisierten Zustand sind, können bei diesem Prozessschritt Geschwindigkeiten > 10 m/min realisiert werden. Zudem werden durch die Entkoppelung der beiden Prozesse Beschichtungen auf den Fasern erzeugt, die verglichen mit Beschichtungen aus dem Stand der Technik weniger Defekte (z.B. Risse und/oder Abplatzungen) aufweisen d.h. durch eine homogenere Mikrostruktur und konstantere Schichtdicke gekennzeichnet sind.

Das Verfahren kann dadurch gekennzeichnet sein, dass das Trocknen in Schritt c) bei einer Temperatur von 20 bis 499 °C, bevorzugt 50 bis 490 °C, besonders bevorzugt 100 bis 480 °C, insbesondere 200 bis 450 °C, durchgeführt wird.

Die Pyrolyse in Schritt d) kann bei einer Temperatur von 501 °C bis 2000 °C, bevorzugt 550 bis 1500 °C, besonders bevorzugt 600 bis 1400 °C, insbesondere 800 °C bis 1300 °C, durchgeführt werden.

Bevorzugt erfolgt die Entschlichtung in Schritt a) thermisch und/oder chemisch, besonders bevorzugt thermisch.

Die Fasern werden in Schritt b) erfindungsgemäß durch ein Tauchbad geführt, das die Mischung aus Beschichtungsvorstufe und Flüssigkeit enthält und/oder werden mit der Mischung aus Flüssigkeit und Beschichtungsvorstufe besprüht.

Bevorzugt werden die Fasern in Schritt c) mit einer Geschwindigkeit von ≥ 3 m/min, bevorzugt ≥ 4 m/min, besonders bevorzugt ≥ 5 m/min, insbesondere 5 bis 30 m/min, durch die Stabilisierungskammer bewegt.

Die trockenen Fasern können nach Schritt c) auf einer Rolle aufgewickelt werden.

Die Fasern in Schritt d) können mit einer Geschwindigkeit von ≥ 1 m/min, bevorzugt ≥ 2 m/min, besonders bevorzugt ≥ 4 m/min, insbesondere 5 bis 20 m/min, durch die Hochtemperaturkammer bewegt werden.

In der erfindungsgemäßen Ausführungsform des Verfahrens werden die Schritte b) bis c) mehrmals wiederholt, bevorzugt ≥ 2 mal, besonders bevorzugt 4 bis 16 mal, insbesondere 6 bis 12 mal. Durch die Wiederholung der Schritte b) und c) kann die gewünschte Schichtdicke eingestellt werden. Ferner lassen sich dadurch die bei einem einzelnen Beschichtungszyklus entstehenden Schichtdefekte (z.B. Risse und/oder Abplatzungen) durch darauffolgende Beschichtungszyklen weiter minimieren bis ganz beheben, wodurch die Qualität der fertigen Beschichtung erheblich gesteigert wird.

In einer bevorzugten Ausführungsform wird mindestens einer der Schritte a) bis c), bevorzugt alle Schritte a) bis c), in einer Glovebox durchgeführt. Dadurch ist auch das Beschichten mit oxidationsempfindlichen Precusoren möglich.

Die flüssige Beschichtungsvorstufe enthält erfindungsgemäß einen nichtoxidischen Hartstoff oder eine Vorstufe eines nichtoxidischen Hartstoffs.

Die flüssige Beschichtungsvorstufe kann Bornitrid, Si-dotiertes Bornitrid, Siliciumcarbid, SiBN₃C, Si₃N₄ oder eine Vorstufe hiervon enthalten.

Bevorzugt enthält die Stabilisierungskammer einen Schlitzofen oder besteht daraus und/oder enthält die Hochtemperaturkammer einen Rohrofen oder besteht daraus.

Ferner wird erfindungsgemäß eine Anlage zur Durchführung des erfindungsgemäßen Verfahrens bereitgestellt. Die Anlage enthält
a) eine Beschichtungskammer zur Beschichtung von Fasern mit einer Mischung enthaltend eine Beschichtungsvorstufe und eine Flüssigkeit, wobei die flüssige Beschichtungsvorstufe einen nichtoxidischen Hartstoff oder eine Vorstufe eines nichtoxidischen Hartstoffs enthält;
b) eine Stabilisierungskammer zur Trocknung und Aushärtung der beschichteten Fasern, wobei die Stabilisierungskammer eine Heizvorrichtung enthält und eine Temperatur von < 500 °C aufweist;
c) eine Hochtemperaturkammer zur Pyrolyse der trockenen Fasern, wobei die Hochtemperaturkammer eine Heizvorrichtung enthält und eine Temperatur von > 500 °C aufweist; und
d) ein Transportmechanismus zum Transport der Fasern von der Beschichtungskammer in die Stabilisierungskammer und die Hochtemperaturkammer;
wobei der Transportmechanismus so eingestellt ist, dass er die Fasern vor der Führung zur Hochtemperaturkammer mehrmals von der Stabilisierungskammer zur Beschichtungskammer führt.

Die Anlage kann dadurch gekennzeichnet sein, dass die Temperatur der Stabilisierungskammer 20 bis 499 °C, bevorzugt 50 bis 490 °C, besonders bevorzugt 100 bis 480 °C, insbesondere 200 bis 450 °C, beträgt.

Die Temperatur der Hochtemperaturkammer kann 501 °C bis 2000 °C, bevorzugt 550 bis 1500 °C, besonders bevorzugt 600 bis 1400 °C, insbesondere 800 °C bis 1300 °C, betragen.

Darüberhinaus kann die Anlage eine Entschlichtungskammer zur thermischen und/oder chemischen Entschlichtung enthalten.

Die Beschichtungskammer kann ein Tauchbad mit der Mischung aus Beschichtungsvorstufe und Flüssigkeit enthalten oder daraus bestehen und/oder die Beschichtungskammer kann eine Sprühkammer mit Düsen zur Versprühung der Mischung aus Beschichtungsvorstufe und Flüssigkeit enthalten oder daraus bestehen.

Der Transportmechanismus kann so eingestellt sein, dass die Fasern mit einer Geschwindigkeit von ≥ 3 m/min, bevorzugt ≥ 4 m/min, besonders bevorzugt ≥ 5 m/min, insbesondere 5 bis 30 m/min, durch die Stabilisierungskammer bewegt werden.

Die Anlage kann eine Rolle zur Aufwicklung der trockenen und ausgehärteten Fasern enthalten.

Der Transportmechanismus kann so eingestellt sein, dass die Fasern mit einer Geschwindigkeit von ≥ 1 m/min, bevorzugt ≥ 2 m/min, besonders bevorzugt ≥ 4 m/min, insbesondere 5 bis 20 m/min, durch die Hochtemperaturkammer bewegt werden.

Ferner kann der Transportmechanismus so eingestellt sein, dass er die Fasern vor der Führung zur Hochtemperaturkammer mehrmals von der Stabilisierungskammer zur Beschichtungskammer führt, bevorzugt ≥ 2 mal, besonders bevorzugt 4 bis 16 mal, insbesondere 6 bis 12 mal.

Durch die Entkopplung von Beschichtungszyklus und thermischer Prozessierung der Beschichtung ist eine kompakte Bauweise möglich, so dass das System auch in Gloveboxen installiert werden kann. Folglich können die Beschichtungskammer und/oder die Stabilisierungskammer so dimensioniert sein, dass sie im Innenraum einer Glovebox angeordnet werden können, bevorzugt weisen diese eine Länge von ≤ 1 m, Breite von ≤ 1 m und/oder Höhe von ≤ 1 m auf. Es wird somit auch eine Glovebox enthaltend die erfindungsgemäße Anlage bereitgestellt.

Die flüssige Beschichtungsvorstufe in der Anlage enthält erfindungsgemäß einen nichtoxidischen Hartstoff oder eine Vorstufe eines nichtoxidischen Hartstoffs.

Die flüssige Beschichtungsvorstufe in der Anlage kann Bornitrid, Si-dotiertes Bornitrid, Siliciumcarbid, SiBN₃C, Si₃N₄ oder eine Vorstufe hiervon enthalten.

Bevorzugt enthält die Stabilisierungskammer der Anlage einen Schlitzofen oder besteht daraus und/oder enthält die Hochtemperaturkammer der Anlage einen Rohrofen oder besteht daraus.

Es werden mithin beschichtete Fasern offenbart, die durch das erfindungsgemäße Verfahren herstellbar sind.

Die einzelnen Fasern können eine Beschichtung aufweisen, die Bornitrid enthält oder daraus besteht und/oder eine Beschichtung aufweisen, die Siliciumcarbid enthält oder daraus besteht. Bevorzugt enthalten die Fasern eine erste, fasernahe Beschichtung enthaltend oder bestehend aus Bornitrid und eine zweite, faserferne Beschichtung enthaltend oder bestehend aus Siliciumcarbid. Insbesondere kann die Bornitrid-Schicht auf der Faser aufgebracht sein und die Siliciumcarbid-Schicht auf der Bornitrid-Schicht aufgebracht sein.

Die einzelnen Fasern können mindestens eine (bevorzugt mindestens zwei) homogene, keramische Beschichtung aufweisen, die eine Schichtdicke von 10 bis 1000 nm, bevorzugt 20 bis 800 nm, weiterhin bevorzugt 30 bis 600 nm, besonders bevorzugt 40 bis 400 nm, insbesondere 50 bis 200 nm, aufweist.

In einer bevorzugten Ausgestaltungsform weisen die einzelnen Fasern mindestens eine homogene Beschichtung auf, die
a) Bornitrid enthält oder daraus besteht und eine Schichtdicke von 10 bis 500 nm, bevorzugt 20 bis 400 nm, besonders bevorzugt 30 bis 300 nm, insbesondere 40 bis 150 nm, aufweist; und/oder
b) Siliciumcarbid enthält oder daraus besteht und eine Schichtdicke von 10 bis 1000 nm, bevorzugt 20 bis 800 nm, besonders bevorzugt 50 bis 500, insbesondere 100 bis 200 nm, aufweist.

Letztlich wird die Verwendung der erfindungsgemäßen, beschichteten Fasern als Additiv in keramischen Werkstoffen, Isolationsmaterialien, Katalysatoren, elektrisch leitfähigen Materialien, dielektrischen Materialien, Sensoren, Energiespeichermaterialien und Energiewandlungsmaterialien vorgeschlagen.

Anhand der nachfolgenden Figuren und Beispiele soll der erfindungsgemäße Gegenstand näher erläutert werden, ohne diesen auf die hier dargestellten Ausführungsformen einschränken zu wollen.

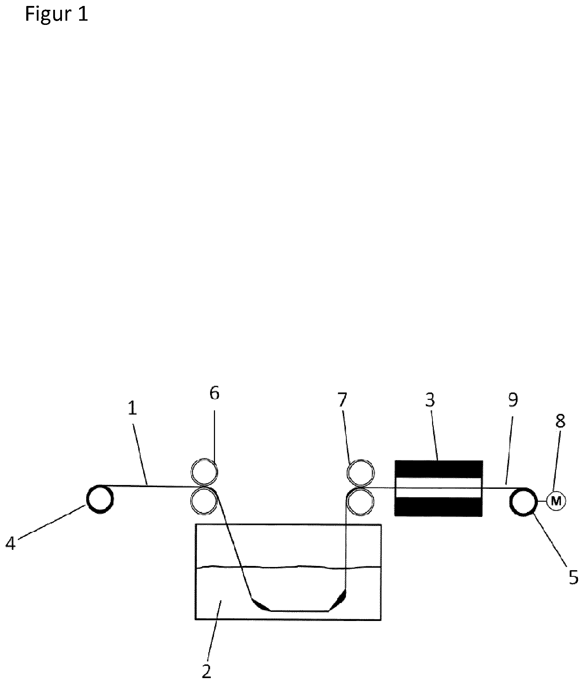

Figur 1 zeigt einen ersten Teil einer erfindungsgemäßen Anlage bzw. des erfindungsgemäßen Verfahrens. Über einen Motor 8 der Anlage angetrieben werden einzelne Fasern 1 eines entschlichteten Faserbündels von einer ersten Rolle 4 der Anlage durch eine erste Walzenanordnung 6 in ein Beschichtungsbad 2 geführt, wobei Fasern mit einer flüssigen Beschichtung entstehen. In dieser Ausgestaltungsform der Anlage werden über ein zweites Walzenpaar 7 die beschichteten Fasern durch eine Stabilisierungskammer 3 geführt, in welcher die flüssige Beschichtung auf den Fasern getrocknet und ausgehärtet wird. Vor der Pyrolyse in einer Hochtemperaturkammer können die getrockneten Fasern 9 auf eine zweite Rolle 5 aufgewickelt werden.

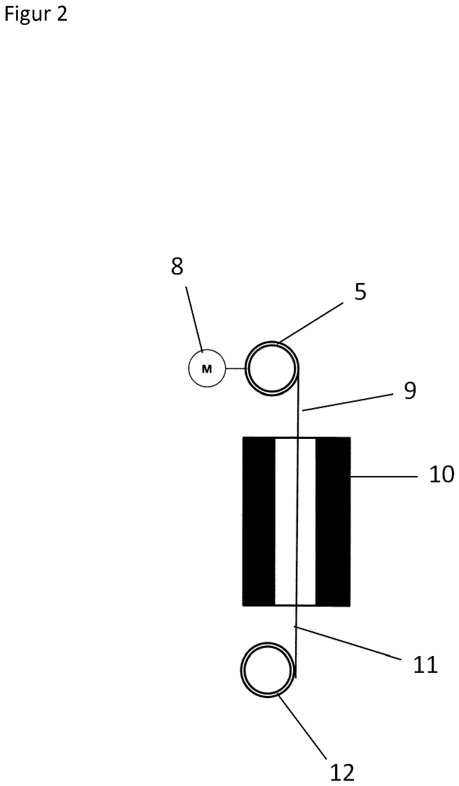

Figur 2 zeigt einen zweiten Teil einer Anlage bzw. des erfindungsgemäßen Verfahrens, der hier vom ersten Teil vollständig entkoppelt ist. Angetrieben durch einen Motor 8 werden die getrockneten Fasern 9 von der zweiten Rolle 5 durch eine Hochtemperaturkammer 10 geführt, wobei durch Pyrolyse ein Fasern 11 entstehen, die eine homogene, keramische Beschichtung aufweisen. Die Fasern können nach Passieren der Hochtemperaturkammer auf eine dritte Rolle 12 aufgewickelt werden.

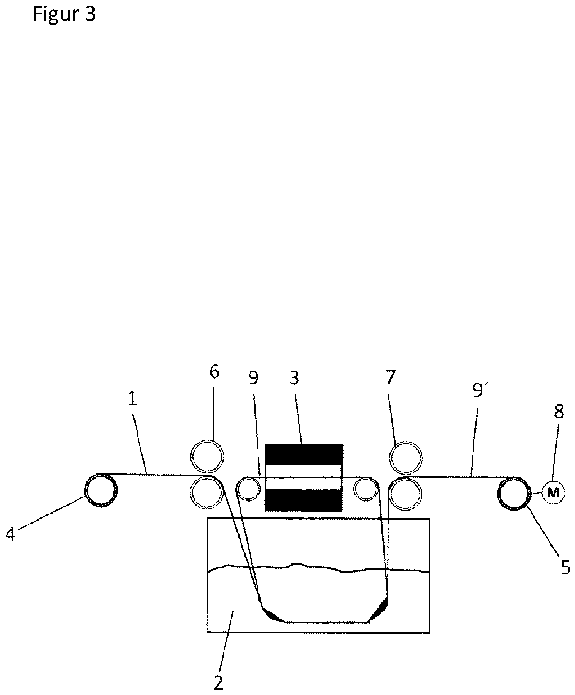

Figur 3 zeigt eine Variante eines ersten Teils einer erfindungsgemäßen Anlage bzw. des erfindungsgemäßen Verfahrens. Die hier dargestellte Anlage entspricht im Wesentlichen der Anlage aus Figur 1. Auch hier werden über einen Motor 8 angetrieben einzelne Fasern 1 eines entschlichteten Faserbündels von einer ersten Rolle 4 der Anlage durch eine erste Walzenanordnung 6 in ein Beschichtungsbad 2 geführt, wobei Fasern mit einer flüssigen Beschichtung entstehen. Die beschichteten Fasern werden durch eine Stabilisierungskammer 3 geführt, in welcher die flüssige Beschichtung auf den Fasern getrocknet und ausgehärtet wird. Vor der Pyrolyse in einer Hochtemperaturkammer werden die Fasern 9 in dieser Variante mindestens ein weiteres Mal durch das Beschichtungsbad 2 und die Stabilisierungskammer 3 geleitet. Folglich entsteht vor der Pyrolyse eine trockene, mehrfach beschichtete Faser 9'. Die getrocknete, mehrfach beschichtete Fasern 9' kann wie in Figur 1 dargestellt vor der Pyrolyse in einer Hochtemperaturkammer auf eine zweite Rolle 5 aufgewickelt werden.

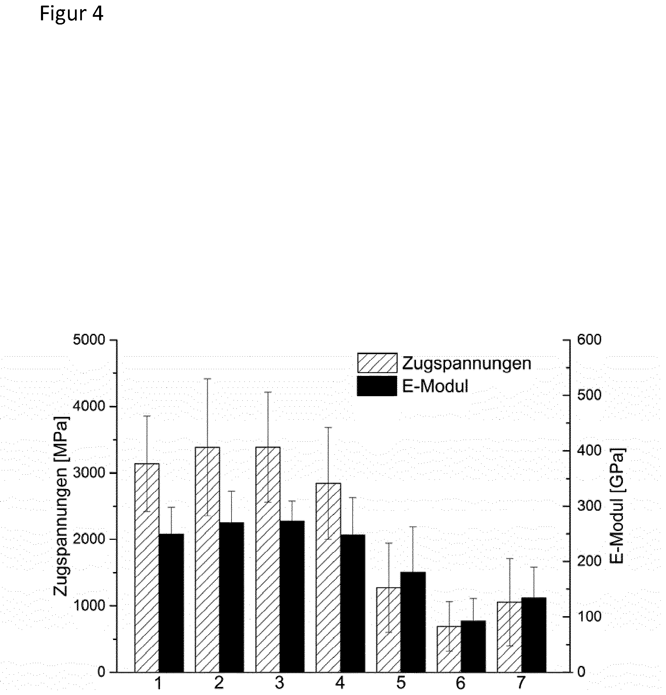

Figur 4 zeigt das Ergebnis von Einzelfaserzugprüfungen nach DIN EN 1007-4, die mit SiC-Fasern durchgeführt wurde. Es wurden unbeschichtete SiC-Fasern, SiC-Fasern nach der Beschichtung mit Bornitrid-Precursor (d.h. Fasern nach Stabilisierungskammer) und mit Bornitrid-Beschichtung versehene SiC-Fasern (d.h. Fasern nach Pyrolysekammer) gemessen. Zudem wurden Fasern gemessen, die ohne Schichtauftrag lediglich die Pyrolysekammer passiert haben. Darüberhinaus sind die mechanischen Eigenschaften nach einer Auslagerung über 50 Stunden angegeben. Die Nummerierung der x-Achse bezieht sich auf folgende geprüfte Fasern:
1. Hi Nicalon, entschlichtet;
2. Hi Nicalon, 8x BN, ohne Pyrolyse;
3. Hi Nicalon, 8x BN, nach Pyrolyse bei 1200 °C;
4. Hi Nicalon, 8x Prozessdurchlauf ohne Schichtauftrag, nach Pyrolyse bei 1200 °C;
5. Hi Nicalon, entschlichtet, nach 50 h Auslagerung bei 1200°C in N₂-Atmosphäre;
6. Hi Nicalon, 8x BN, nach Pyrolyse bei 1200 °C und 50 h Auslagerung bei 1200°C in N₂-Atmosphäre;
7. Hi Nicalon, 8x Prozessdurchlauf ohne Schichtauftrag, nach Pyrolyse bei 1200 °C und 50 h Auslagerung bei 1200°C in N₂-Atmosphäre.

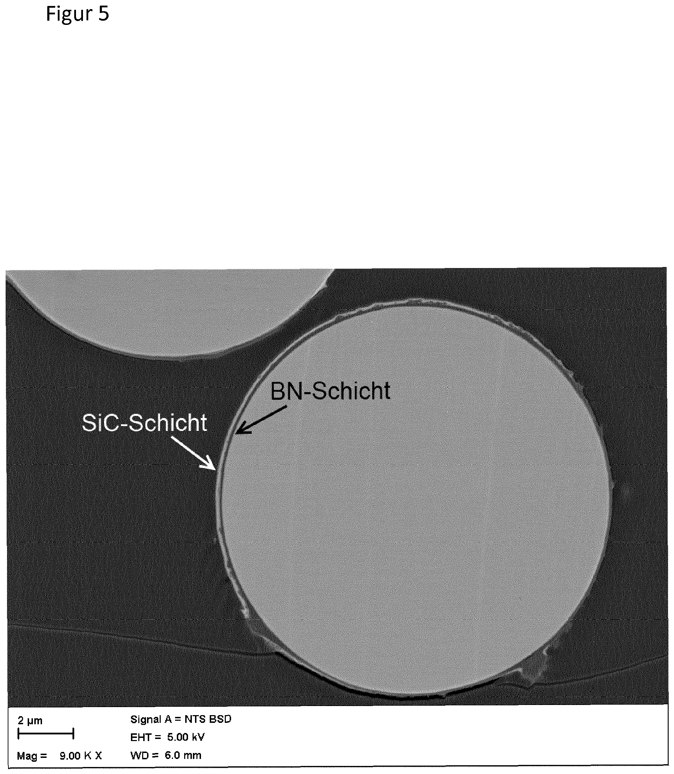

Figur 5 zeigt eine REM-Aufnahme eines Querschnitts einer Faser, die zunächst mit einer Bornitrid-Schicht (Schichtdicke ca. 80 nm) und anschließend mit einer Siliciumcarbid-Schicht (Schichtdicke ca. 135 nm) versehen wurde.

### Beispiel 1 - Beispiel eines erfindungsgemäßen Verfahrens

Zunächst wird ein Faserbündel durch eine Hochtemperaturkammer (Rohrofen) bei 700 °C in N₂-Atmosphäre gezogen (thermische Entschlichtung) und dann auf eine Rolle aufgewickelt.

Anschließend wird das entschlichtete Faserbündel d.h. die Fasern von der Rolle abgewickelt und durch ein Beschichtungsbad geführt. Für die Beschichtung mit Bornitrid enthält das Beschichtungsbad eine 0,5 Gew.-%-ige Polyborazol-Lösung.

Danach werden die beschichteten Fasern zunächst mit einer Geschwindigkeit von 15 m/min durch einen Ofen mit einer Temperatur von 360 °C (Stabilisierungskammer) geführt, wodurch die Beschichtungen stabilisiert werden. Beim Passieren der Stabilisierungskammer werden Restlösemittel entfernt, evtl. ein Teil der Organik abgespalten und die Beschichtungen derart stabilisiert, dass sie bei erneutem Passieren durch das Beschichtungsbad nicht vom Lösemittel an- oder abgelöst werden.

Nach dem Passieren der Stabilisierungskammer werden die Fasern wieder auf eine Rolle aufgewickelt (siehe Fig. 1). Vor dem Aufwickeln können die Fasern jedoch auch wieder durch das Beschichtungsbad und die Stabilisierungskammer geführt werden (z.B. idealerweise 8 mal), wodurch die Beschichtung aus mehreren einzelnen Lagen aufgebaut ist (z.B. idealerweise 8 Lagen). Durch den mehrlagigen Aufbau können Abplatzungen, Risse, aufgebrochene Verbrückungen, etc. minimiert bis ganz behoben werden.

Nach erfolgtem Schichtauftrag erfolgt - entkoppelt vom Beschichtungszyklus - die thermische Prozessierung der beschichteten Fasern in einer Hochtemperaturkammer (siehe Fig. 2). Dieser Prozess wird kontinuierlich gefahren, wobei die beschichteten Fasern mit einer Geschwindigkeit von 2 m/min durch einen Rohrofen als Hochtemperaturkammer gezogen wird. Der Rohrofen weist eine Temperatur von 1200 °C und eine N₂-Atmosphäre auf.

Dadurch, dass die Schichten schon bei Temperaturen < 500 °C stabilisiert wurden, können deutlich höhere Prozessgeschwindigkeiten als beim derzeitigen Stand der Technik realisiert werden.

Bevorzugt werden die Fasern zusätzlich mit einer SiC-Schicht versehen. Hierfür enthält das Beschichtungsbad eine 0,5 Gew.-%-ige Polysilan-Polycarbosilan-Copolymer Lösung. Idealerweise werden 4 Lagen abgeschieden, bevor es zur thermischen Prozessierung in der Hochtemperaturkammer kommt. Der Auftrag der Polysilan-Polycarbosilan-Copolymer Lösung kann entweder vor oder nach der Pyrolyse der ersten Beschichtung (Bornitrid) erfolgen. Eine mit Bornitrid und Siliciumcarbid beschichtete Faser ist in Fig. 5 dargestellt.

### Beispiel 2 - Variante des erfindungsgemäßen Verfahrens

Hier wird der mehrfache Beschichtungszyklus in einem Rolle-zu-Rolle-Prozess gefahren (siehe Fig. 3). Die Fasern werden dabei nach Abziehen von der Rolle mehrfach durch das Beschichtungsbad und den Stabilisierungsofen geführt bevor es wieder auf eine Rolle aufgewickelt wird. Beim Stabilisierungsofen wird z.B. ein Schlitzofen eingesetzt.

Als Beschichtungszyklen können zum Beispiel 2 bis 16 Durchläufe (typischerweise 8 Durchläufe) derart durchgeführt werden. Für diese Variante sind Vorrichtungen notwendig, um die Fasern kontrolliert durch das Beschichtungsbad und dem Stabilisierungsofen zu führen.

Nach dem Schichtauftrag erfolgt die thermische Prozessierung der beschichteten Fasern bei Temperaturen > 500 °(in einem kontinuierlichen Prozess analog zu Beispiel 1 (siehe oben).

Im Vergleich zu dem Verfahren gemäß Beispiel 1 muss bei der hier dargestellten Variante der beschichtete Faden nicht mehr erneut durch Rollenwechsel in den Prozess eingeführt werden. Dadurch sind deutliche Zeitersparnisse möglich, welche eine signifikante Steigerung des Durchsatzes ermöglichen.

## Patentansprüche

1. Verfahren zur Herstellung von Fasern, die eine homogene, keramische Beschichtung aufweisen, aus einem Faserbündel, umfassend die Schritte
a) Entschlichtung eines Faserbündels zum Freilegen einzelner Fasern;
b) Homogene Beschichtung der einzelnen Fasern mit einer Mischung enthaltend eine Beschichtungsvorstufe und eine Flüssigkeit, wobei die flüssige Beschichtungsvorstufe einen nichtoxidischen Hartstoff oder eine Vorstufe eines nichtoxidischen Hartstoffs enthält und wobei die Fasern durch ein Tauchbad geführt werden, das die Mischung aus Beschichtungsvorstufe und Flüssigkeit enthält und/oder mit der Mischung aus Flüssigkeit und Beschichtungsvorstufe besprüht werden, wobei Fasern mit einer flüssigen Beschichtung entstehen;
c) Trocknen und Aushärten der flüssigen Beschichtung in einer Stabilisierungskammer bei einer Temperatur von < 500 °C, wobei die Flüssigkeit verdampft und die Beschichtungsvorstufe so stark an den Fasern haftet, dass diese nicht mehr durch ein erneutes Einwirken der Flüssigkeit von den Fasern ablösbar ist;
d) Pyrolyse der Beschichtungsvorstufe in einer Hochtemperaturkammer bei einer Temperatur von > 500 °C, wobei Fasern entstehen, die eine homogene, keramische Beschichtung aufweisen;
wobei die Schritte b) bis c) mehrmals wiederholt werden.

2. Verfahren gemäß Anspruch 1, **dadurch gekennzeichnet, dass**
i) das Trocknen in Schritt c) bei einer Temperatur von 20 bis 499 °C, bevorzugt 50 bis 490 °C, besonders bevorzugt 100 bis 480 °C, insbesondere 200 bis 450 °C, durchgeführt wird; und/oder
ii) die Pyrolyse in Schritt d) bei einer Temperatur von 501 °C bis 2000 °C, bevorzugt 550 bis 1500 °C, besonders bevorzugt 600 bis 1400 °C, insbesondere 800 °C bis 1300 °C, durchgeführt wird; und/oder
iii) die Entschlichtung in Schritt a) thermisch und/oder chemisch erfolgt.

3. Verfahren gemäß einem der vorhergehenden Ansprüche, **dadurch gekennzeichnet, dass** die Fasern
i) in Schritt c) mit einer Geschwindigkeit von ≥ 3 m/min, bevorzugt ≥ 4 m/min, besonders bevorzugt ≥ 5 m/min, insbesondere 5 bis 30 m/min, durch die Stabilisierungskammer bewegt werden; und/oder
ii) nach Schritt c) auf einer Rolle aufgewickelt werden; und/oder
iii) in Schritt d) mit einer Geschwindigkeit von ≥ 1 m/min, bevorzugt ≥ 2 m/min, besonders bevorzugt ≥ 4 m/min, insbesondere 5 bis 20 m/min, durch die Hochtemperaturkammer bewegt werden.

4. Verfahren gemäß einem der vorhergehenden Ansprüche, **dadurch gekennzeichnet, dass** die Schritte b) bis c) > 2 mal wiederholt werden, besonders bevorzugt 4 bis 16 mal, insbesondere 6 bis 12 mal, und/oder dass mindestens einer der Schritte a) bis c), bevorzugt alle Schritte a) bis c), in einer Glovebox durchgeführt werden.

5. Verfahren gemäß einem der vorhergehenden Ansprüche, **dadurch gekennzeichnet, dass** die flüssige Beschichtungsvorstufe Bornitrid, Si-dotiertes Bornitrid, Siliciumcarbid, SiBN₃C, Si₃N₄ oder eine Vorstufe hiervon enthält.

6. Verfahren gemäß einem der vorhergehenden Ansprüche, **dadurch gekennzeichnet, dass** die Stabilisierungskammer einen Schlitzofen enthält oder daraus besteht und/oder die Hochtemperaturkammer einen Rohrofen enthält oder daraus besteht.

7. Anlage zur Durchführung des Verfahrens gemäß einem der Ansprüche 1 bis 6, enthaltend
a) eine Beschichtungskammer zur Beschichtung von Fasern mit einer Mischung enthaltend eine Beschichtungsvorstufe und eine Flüssigkeit, wobei die flüssige Beschichtungsvorstufe einen nichtoxidischen Hartstoff oder eine Vorstufe eines nichtoxidischen Hartstoffs enthält;
b) eine Stabilisierungskammer zur Trocknung und Aushärtung der beschichteten Fasern, wobei die Stabilisierungskammer eine Heizvorrichtung enthält und eine Temperatur von < 500 °C aufweist;
c) eine Hochtemperaturkammer zur Pyrolyse der trockenen Fasern, wobei die Hochtemperaturkammer eine Heizvorrichtung enthält und eine Temperatur von > 500 °C aufweist;
d) ein Transportmechanismus zum Transport der Fasern von der Beschichtungskammer in die Stabilisierungskammer und die Hochtemperaturkammer;
wobei der Transportmechanismus so eingestellt ist, dass er die Fasern vor der Führung zur Hochtemperaturkammer mehrmals von der Stabilisierungskammer zur Beschichtungskammer führt.

8. Anlage gemäß Anspruch 7, **dadurch gekennzeichnet, dass** die Temperatur der
i) Stabilisierungskammer 20 bis 499 °C, bevorzugt 50 bis 490 °C, besonders bevorzugt 100 bis 480 °C, insbesondere 200 bis 450 °C, beträgt; und/oder
ii) Hochtemperaturkammer 501 °C bis 2000 °C, bevorzugt 550 bis 1500 °C, besonders bevorzugt 600 bis 1400 °C, insbesondere 800 °C bis 1300 °C, beträgt.

9. Anlage gemäß einem der Ansprüche 7 oder 8, **dadurch gekennzeichnet, dass** die Anlage
i) eine Entschlichtungskammer zur thermischen und/oder chemischen Entschlichtung enthält; und/oder
ii) eine Rolle zur Aufwicklung der trockenen und ausgehärteten Fasern enthält.

10. Anlage gemäß einem der Ansprüche 7 bis 9, **dadurch gekennzeichnet, dass**
i) die Beschichtungskammer ein Tauchbad mit der Mischung aus Beschichtungsvorstufe und Flüssigkeit enthält oder daraus besteht und/oder die Beschichtungskammer so dimensioniert ist, dass sie im Innenraum einer Glovebox angeordnet werden kann, bevorzugt eine Länge von ≤ 1 m, Breite von ≤ 1 m und/oder Höhe von ≤ 1 m aufweist; und/oder
ii) die Beschichtungskammer eine Sprühkammer mit Düsen zur Versprühung der Mischung aus Beschichtungsvorstufe und Flüssigkeit enthält oder daraus besteht und/oder die Stabilisierungskammer so dimensioniert ist, dass sie im Innenraum einer Glovebox angeordnet werden kann, bevorzugt eine Länge von ≤ 1 m, Breite von ≤ 1 m und/oder Höhe von ≤ 1 m aufweist.

11. Anlage gemäß einem der Ansprüche 7 bis 10, **dadurch gekennzeichnet, dass** der Transportmechanismus
i) einstellbar ist, die Fasern mit einer Geschwindigkeit von ≥ 3 m/min, bevorzugt ≥ 4 m/min, besonders bevorzugt ≥ 5 m/min, insbesondere 5 bis 30 m/min, durch die Stabilisierungskammer zu bewegen; und/oder
ii) einstellbar ist, die Fasern mit einer Geschwindigkeit von ≥ 1 m/min, bevorzugt ≥ 2 m/min, besonders bevorzugt ≥ 4 m/min, insbesondere 5 bis 20 m/min, durch die Hochtemperaturkammer zu bewegen; und/oder
iii) so eingestellt ist, dass er die Fasern vor der Führung zur Hochtemperaturkammer > 2 mal von der Stabilisierungskammer zur Beschichtungskammer führt, besonders bevorzugt 4 bis 16 mal, insbesondere 6 bis 12 mal.

12. Anlage gemäß einem der Ansprüche 7 bis 11, **dadurch gekennzeichnet, dass** die Stabilisierungskammer einen Schlitzofen enthält oder daraus besteht und/oder die Hochtemperaturkammer einen Rohrofen enthält oder daraus besteht.

## Claims

1. A method for producing fibers that have a homogeneous, ceramic coating from a fiber bundle, comprising the steps
a) desizing a fiber bundle to expose individual fibers;
b) homogeneous coating of the individual fibers with a mixture comprising a coating precursor and a liquid, wherein the liquid coating precursor comprises a non-oxidic hard material or a precursor of a non-oxidic hard material, and wherein the fibers are led through an immersion bath that comprises the mixture of coating precursor and liquid and/or are sprayed with the mixture of liquid and coating precursor; with fibers having a liquid coating being produced;
c) drying and hardening the liquid coating in a stabilization chamber at a temperature of < 500°C, wherein the liquid evaporates and the coating precursor sticks so firmly to the fibers that they are no longer releasable from the fibers by a repeat action of the liquid;
d) pyrolysis of the coating precursor in a high temperature chamber at a temperature of > 500°C, wherein fibers are produced that have a homogeneous, ceramic coating;
wherein steps b) to c) are repeated a number of times.

2. A method in accordance with claim 1, **characterized in that**
i) the drying in step c) is carried out at a temperature of 20 to 499°C, preferably 50 to 490°C, particularly preferably 100 to 480°C, in particular 200 to 450°C; and/or
ii) the pyrolysis in step d) is carried out at a temperature of 501 °C to 2000°C, preferably 550 to 1500°C, particularly preferably 600 to 1400°C, in particular 800°C to 1300°C; and/or
iii) the desizing in step a) takes place thermally and/or chemically.

3. A method in accordance with one of the preceding claims, **characterized in that** the fibers
i) are moved through the stabilization chamber in step c) at a speed of ≥ 3 m/min, preferably ≥ 4 m/min, particularly preferably ≥ 5 m/min, in particular 5 to 30 m/min; and/or
ii) are wound onto a roll after step c); and/or
iii) are moved through the high temperature chamber in step d) at a speed of ≥ 1 m/min, preferably ≥ 2 m/min, particularly preferably ≥ 4 m/min, in particular 5 to 20 m/min.

4. A method in accordance with one of the preceding claims, **characterized in that** steps b) to c) are repeated > 2 times, particularly preferably 4 to 16 times, in particular 6 to 12 times; and/or **in that** at least one of the steps a) to c), preferably all of the steps a) to c), are carried out in a glove box.

5. A method in accordance with one of the preceding claims, **characterized in that** the liquid coating precursor comprises boron nitride, Si-doped boron nitride, silicon carbide, SiBN₃C, Si₃N₄, or a precursor thereof.

6. A method in accordance with one of the preceding claims, **characterized in that** the stabilization chamber comprises or consists of a slot furnace; and/or the high temperature chamber comprises or consists of a tube furnace.

7. A unit for carrying out the method in accordance with one of the claims 1 to 6, comprising
a) a coating chamber for coating fibers with a mixture comprising a coating precursor and a liquid, wherein the liquid coating precursor comprises a non-oxidic hard material or a precursor of a non-oxidic hard material;
b) a stabilization chamber for drying and hardening the coating fibers, wherein the stabilization chamber comprises a heating device and has a temperature of < 500°C;
c) a high temperature chamber for the pyrolysis of the dry coating fibers, wherein the high temperature chamber comprises a heating device and has a temperature of > 500°C;
d) a transport mechanism for transporting the fibers from the coating chamber into the stabilization chamber and the high temperature chamber,
wherein the transport mechanism is set such that it leads the fibers from the stabilization chamber to the coating chamber multiple times before leading them to the high temperature chamber.

8. A unit in accordance with claim 7, **characterized in that** the temperature of the
i) stabilization chamber amounts to 20 to 499°C, preferably 50 to 490°C, particularly preferably 100 to 480°C, in particular 200 to 450°C; and/or
ii) high temperature chamber amounts to 501 °C to 2000°C, preferably 550 to 1500°C, particularly preferably 600 to 1400°C, in particular 800°C to 1300°C.

9. A unit in accordance with one of the claims 7 to 8, **characterized in that** the unit
i) comprises a desizing chamber for thermal and/or chemical desizing; and/or
ii) comprises a roll for winding the dry and hardened fibers.

10. A unit in accordance with one of the claims 7 to 9, **characterized in that**
i) the coating chamber comprises or consists of an immersion bath with the mixture of coating precursor and liquid; and/or the coating chamber is dimensioned such that it can be arranged in the inner space of a glove box, preferably has a length of ≤ 1 m, a width of ≤ 1 m and/or a height of ≤ 1 m;
ii) the coating chamber comprises or consists of a spray chamber with nozzles for spraying the mixture of coating precursor and liquid; and/or the stabilization chamber is dimensioned such that it can be arranged in the inner space of a glove box, preferably has a length of ≤ 1 m, a width of ≤ 1 m and/or a height of ≤ 1 m.

11. A unit in accordance with one of the claims 7 to 10, **characterized in that** the transport mechanism
i) can be set to move the fibers through the stabilization chamber at a speed of ≥ 3 m/min, preferably ≥ 4 m/min, particularly preferably ≥ 5 m/min, in particular 5 to 30 m/min; and/or
ii) can be set to move the fibers through the high temperature chamber at a speed of ≥ 1 m/min, preferably ≥ 2 m/min, particularly preferably ≥ 4 m/min, in particular 5 to 20 m/min; and/or
iii) is set such that it leads the fibers from the stabilization chamber to the coating chamber > 2 times, particularly preferably 4 to 16 times, in particular 6 to 12 times, before leading them to the high temperature chamber.

12. A unit in accordance with one of the claims 7 to 11, **characterized in that** the stabilization chamber comprises or consists of a slot furnace; and/or **in that** the high temperature chamber comprises or consists of a tube furnace..

## Revendications

1. Procédé de fabrication de fibres qui présentent un revêtement céramique homogène, à partir d'un faisceau de fibres, comprenant les étapes suivantes :
a) désencollage d'un faisceau de fibres pour dégager des fibres individuelles ;
b) revêtement homogène des fibres individuelles avec un mélange contenant un précurseur de revêtement et un liquide, le précurseur de revêtement liquide contenant une matière dure non-oxyde ou un précurseur d'une matière dure non-oxyde, et les fibres étant envoyées dans une cuve d'immersion, qui contient le mélange du précurseur de revêtement et d'un liquide, et/ou reçoivent une pulvérisation du mélange du liquide et du précurseur de revêtement, avec obtention de fibres comportant un revêtement liquide ;
c) séchage et durcissement du revêtement liquide dans une chambre de stabilisation à une température < 500 °C, ce qui provoque une évaporation du liquide, et le précurseur de revêtement adhérant alors si fortement aux fibres qu'il ne peut plus être détaché des fibres sous l'effet d'une nouvelle action du liquide ;
d) pyrolyse du précurseur de revêtement dans une chambre à haute température à une température > 500 °C, avec obtention de fibres qui présentent un revêtement céramique homogène ;
les étapes b) à c) étant répétées plusieurs fois.

2. Procédé selon la revendication 1, **caractérisé en ce que**
i) le séchage de l'étape c) est mis en œuvre à une température de 20 à 499 °C, de préférence de 50 à 490 °C, d'une manière particulièrement préférée de 100 à 480 °C, en particulier de 200 à 450 °C ; et/ou
ii) la pyrolyse de l'étape d) est mise en œuvre à une température de 501 °C à 2000 °C, de préférence de 550 à 1500 °C, d'une manière particulièrement préférée de 600 à 1400 °C, en particulier de 800 °C à 1300 °C ; et/ou
iii) le désencollage de l'étape a) est réalisé par voie thermique et/ou chimique.

3. Procédé selon l'une des revendications précédentes, **caractérisé en ce que** les fibres
i) dans l'étape c) traversent la chambre de stabilisation à une vitesse ≥ 3 m/min, de préférence ≥ 4 m/min, d'une manière particulièrement préférée ≥ 5 m/min, en particulier de 5 à 30 m/min ; et/ou
ii) après l'étape c), sont enroulées sur un rouleau ; et/ou
iii) dans l'étape d), traversent la chambre à haute température à une vitesse ≥ 1 m/min, de préférence ≥ 2 m/min, d'une manière particulièrement préférée ≥ 4 m/min, en particulier de 5 à 20 m/min.

4. Procédé selon l'une des revendications précédentes, **caractérisé en ce que** les étapes b) à c) sont répétées > 2 fois, d'une manière particulièrement préférée 4 à 16 fois, en particulier 6 à 12 fois, et/ou qu'au moins l'une des étapes a) à c), de préférence toutes les étapes a) à c), sont mises en œuvre dans une boîte à gants.

5. Procédé selon l'une des revendications précédentes, **caractérisé en ce que** le précurseur de revêtement liquide contient du nitrure de bore, du nitrure de bore dopé au Si, du carbure de silicium, du SiBN₃C, du Si₃N₄ ou un précurseur de ceux-ci.

6. Procédé selon l'une des revendications précédente, **caractérisé en ce que** la chambre de stabilisation contient un four à fente, ou en est constituée, et/ou la chambre à haute température contient un four tubulaire ou en est constituée.

7. Installation pour la mise en œuvre du procédé selon l'une des revendications 1 à 6, contenant
a) une chambre de revêtement, destinée au revêtement de fibres avec un mélange contenant un précurseur de revêtement et un liquide, le précurseur de revêtement liquide contenant une matière dure non-oxyde ou un précurseur d'une matière dure non-oxyde ;
b) une chambre de stabilisation, destinée au séchage et au durcissement des fibres revêtues, la chambre de stabilisation contenant un dispositif de chauffage et présentant une température < 500 °C ;
c) une chambre à haute température destinée à la pyrolyse des fibres séchées, la chambre à haute température contenant un dispositif de chauffage et présentant une température > 500 °C ;
d) un mécanisme de transport, destiné au transport des fibres de la chambre de revêtement à la chambre de stabilisation et à la chambre à haute température ;
le mécanisme de transport étant réglé de façon à guider plusieurs fois les fibres, avant leur envoi à la chambre à haute température, de la chambre de stabilisation à la chambre de revêtement.

8. Installation selon la revendication 7, **caractérisée en ce que** la température
i) de la chambre de stabilisation est de 20 à 499 °C, de préférence de 50 à 490 °C, d'une manière particulièrement préférée de 100 à 480 °C, en particulier de 200 à 450 °C ; et/ou
ii) de la chambre à haute température est de 501 °C à 2000 °C, de préférence de 550 à 1500 °C, d'une manière particulièrement préférée de 600 à 1400 °C, en particulier de 800 °C à 1300 °C.

9. Installation selon l'une des revendications 7 ou 8, **caractérisée en ce que** l'installation
i) contient une chambre de désencollage destinée au désencollage thermique et/ou chimique ; et/ou
ii) contient un rouleau destiné à l'enroulement des fibres sèches et durcies.

10. Installation selon l'une des revendications 7 à 9, **caractérisée en ce que**
i) la chambre de revêtement contient une cuve d'immersion contenant le mélange du précurseur de revêtement et du liquide, ou en est constituée, et/ou la chambre de revêtement est dimensionnée de façon à pouvoir être disposée dans l'espace intérieur d'une boîte à gants, et présente une longueur ≤ 1 m, une largeur ≤ 1 m et/ou une hauteur ≤ 1 m ; et/ou
ii) la chambre de revêtement contient une chambre de pulvérisation comportant des buses destinées à la pulvérisation du mélange du précurseur de revêtement et du liquide, ou en est constituée, et/ou la chambre de stabilisation est dimensionnée de façon à pouvoir être disposée dans l'espace intérieur d'une boîte à gants, et présente de préférence une longueur ≤ 1 m, une largeur ≤ 1 m et/ou une hauteur ≤ 1 m.

11. Installation selon l'une des revendications 7 à 10, **caractérisée en ce que** le mécanisme de transport
i) est réglable pour faire traverser la chambre de stabilisation par les fibres à une vitesse ≥ 3 m/min, de préférence ≥ 4 m/min, d'une manière particulièrement préférée ≥ 5 m/min, en particulier de 5 à 30 m/min ; et/ou
ii) est réglable pour faire traverser la chambre à haute température par les fibres à une vitesse ≥ 1 m/min, de préférence ≥ 2 m/min, d'une manière particulièrement préférée ≥ 4 m/min, en particulier de 5 à 20 m/min ; et/ou
iii) est réglable pour envoyer les fibres, avant leur envoi dans la chambre à haute température, > 2 fois de la chambre de stabilisation à la chambre de revêtement, d'une manière particulièrement préférée 4 à 16 fois, en particulier 6 à 12 fois.

12. Installation selon l'une des revendications 7 à 11, **caractérisée en ce que** la chambre de stabilisation contient un four à fente, ou en est constituée, et/ou que la chambre à haute température contient un four tubulaire ou en est constituée.
